# FASCICULE DE BREVET EUROPEEN

(11) **EP 1 932 001 B1**
(45) Date de publication et mention de la délivrance du brevet: **26.05.2010**
(21) Numéro de dépôt: 06806956.6
(22) Date de dépôt: 04.10.2006
(51) Int. Cl.: G01P 3/80, G01S 17/58

(54) **DISPOSITIF OPTIQUE POUR LA MESURE DE VITESSE DE DEPLACEMENT D'UN OBJET PAR RAPPORT A UNE SURFACE**
OPTISCHE EINRICHTUNG ZUR MESSUNG DER BEWEGUNGSGESCHWINDIGKEIT EINES OBJEKTS RELATIV ZU EINER OBERFLÄCHE
OPTICAL DEVICE FOR MEASURING MOVING SPEED OF AN OBJECT RELATIVE TO A SURFACE

(30) Priorité: 07.10.2005 FR 0510281
(43) Date de publication de la demande: 18.06.2008
(73) Titulaire: COMMISSARIAT A L'ENERGIE ATOMIQUE, 75015 Paris (FR)
(72) Inventeur: FOURCAULT, William, F-38000 Grenoble (FR); CATTIN, Viviane, F-38120 Saint Egreve (FR); GUILHAMAT, Bernard, F-38590 Saint Michel De Saint Geoirs (FR)
(74) Mandataire: Guérin, Michel
(86) Numéro de dépôt international: PCT/EP2006/067021
(87) Numéro de publication internationale: WO 2007/042435

(56) Documents cités:
- EP-A- 0 562 924
- WO-A-98/53327
- DE-A1- 10 248 416
- FR-A1- 2 583 882
- GB-A- 2 221 591
- US-A1- 2003 133 097
- US-A1- 2003 142 290
- US-A1- 2004 027 577
- PATENT ABSTRACTS OF JAPAN vol. 014, no. 385 (P-1094), 20 août 1990 (1990-08-20) -& JP 02 145972 A (AISIN AW CO LTD), 5 juin 1990 (1990-06-05)

## Description

L'invention concerne un dispositif de mesure de vitesse de déplacement relatif d'un objet par rapport à un autre, et plus précisément un capteur de vitesse d'un objet en déplacement le long d'une surface essentiellement plane (en tous cas localement plane) et optiquement texturée (c'est-à-dire non uniforme).

L'invention est applicable dans différents contextes, et on l'expliquera d'abord à propos du contexte dans lequel ce capteur s'avère particulièrement intéressant ; ce contexte est celui de la mesure de vitesse d'un véhicule automobile par observation optique du défilement du sol sous le véhicule : le capteur est monté sous le véhicule.

Les capteurs de vitesse de véhicules roulants reposent le plus souvent sur une mesure de vitesse de rotation des roues, mais ils sont peu précis car il y a toujours une incertitude sur le diamètre des roues (dépendant de l'usure et du taux de gonflage des pneumatiques) et une incertitude sur l'existence d'un roulement sans glissement : le dérapage, le manque d'adhérence des roues sont causes de glissements qui perturbent la mesure. De plus, ces capteurs sont lents, puisqu'on ne dispose de la vitesse que par intégration d'impulsions et les impulsions sont à très bas taux de répétition lorsque le véhicule roule lentement.

C'est pourquoi on a déjà proposé de réaliser des capteurs optiques fixés sous le véhicule, qui observent le sol en déplacement relatif par rapport au véhicule et qui en déduisent la vitesse vraie du véhicule. Le sol présente une texture optique toujours contrastée du fait de la rugosité du revêtement (goudron de la route par exemple) ; un élément photosensible qui observe une petite zone de route éclairée par une source lumineuse va voir varier le flux lumineux en fonction de cette texture si le véhicule avance. En faisant des mesures de corrélation successives entre des portions de signaux reçus par deux capteurs identiques décalés longitudinalement dans la direction de roulage du véhicule et observant donc la même portion de sol à des instants différents, on peut rechercher une corrélation optimale qui permet de déduire la vitesse du véhicule par rapport au sol si on connaît la distance entre les capteurs.

Une solution simple consiste à projeter une tache lumineuse sur la surface de la route à l'aide d'un faisceau de lumière dirigé perpendiculairement à celle-ci, et à observer la lumière réfléchie ou diffusée dans la direction de la source. Une difficulté se présente alors lorsque la réflectance du sol est trop forte : le capteur est ébloui par la réflexion spéculaire de la lumière sur une surface réfléchissante plane et l'image observée n'est pas utilisable. C'est le cas notamment lorsque la route est mouillée : même si l'intensité réfléchie spéculairement n'est que de 3% de l'intensité de l'émission par la source, c'est encore trop pour le capteur qui doit être capable de détecter de très faibles éclairements rétrodiffusés par le sol non mouillé ou le sol sous la couche d'eau.

Pour remédier à ce problème, on a déjà proposé d'une part des solutions à base de traitement de signal, par exemple pour éliminer la portion de signal qui ne provient pas de la texture de sol observée mais qui provient de la couche d'eau qui la recouvre. Ces solutions sont peu efficaces en raison de la nature très variable des conditions observées.

On a proposé aussi d'utiliser des isolateurs optiques, qui, à partir des conditions de polarisation de la lumière (différentes pour la réflexion spéculaire produite par l'eau et la rétrodiffusion produite par le sol), permettent de supprimer la lumière réfléchie indésirable. Ces isolateurs (séparateurs de polarisation) engendrent des pertes d'intensité de signal très importantes de sorte qu'ils sont difficilement utilisables.

Une autre solution consiste à incliner la direction d'émission de la lumière par rapport à la surface du sol. Le récepteur observe le sol à travers une optique dont l'axe est normal au sol, mais la source éclaire le sol obliquement. S'il y a de l'eau, les rayons réfléchis spéculairement sont également obliques et n'atteignent pas le récepteur ; seuls les rayons rétrodiffusés verticalement par le sol sont observés par le récepteur. Cette technique d'élimination de la réflexion spéculaire par inclinaison de l'axe d'éclairement par rapport à l'axe d'observation s'apparente à la technique d'éclairement en champ sombre (en anglais : "darkfield lighting") utilisée en microscopie.

Cependant, on a constaté que cette technique d'éclairement en champ sombre ne donnait pas satisfaction dans l'application envisagée de mesure de vitesse de déplacement d'un véhicule par rapport au sol. Un défaut apparaît lorsque la distance entre le capteur et le sol n'est pas constante. Si la distance est trop grande ou trop petite par rapport à la distance théorique où l'observation est optimale, alors la tache lumineuse produite par la source d'axe incliné sur le sol ne se trouve plus au-dessous du récepteur, et l'optique à ouverture relativement étroite du récepteur ne "verra" pas la tache de lumière. Ou alors il faut agrandir beaucoup la dimension de la tache de lumière et la corrélation ultérieure devient beaucoup plus difficile, et de plus la puissance de la source lumineuse devra être d'autant plus accrue. Par conséquent cette solution n'est pas acceptable dans des contextes où la distance n'est pas fixe. C'est bien ce qui se passe dans le cas d'un véhicule sur le sol.

Le brevet européen EP 0562924 décrit une telle solution : éclairement oblique, observation normale.

Bien entendu le principe reste le même, avec les mêmes inconvénients, si on éclaire le sol normalement, en inclinant l'axe d'observation du récepteur.

On a également proposé dans l'art antérieur (US2003/0034959 A1) des moyens d'analyse de mouvement de souris optique d'ordinateur, utilisant un capteur d'image et une corrélation spatiale d'images successives détectées par le capteur au cours du mouvement de la souris. La recherche de la direction du décalage d'images se fait par recherche de la meilleure corrélation dans toutes les directions de déplacement possibles.

L'invention a pour but de proposer un dispositif de mesure de vitesse par voie optique à partir de l'observation d'une surface par rapport à laquelle l'objet se déplace, ce dispositif pouvant fonctionner avec précision même si la distance entre le dispositif et la surface varie et même si la surface est recouverte d'une couche transparente ayant un pouvoir de réflexion spéculaire important. On considérera ici qu'un pouvoir de réflexion spéculaire est important même s'il ne représente que quelques pour cents.

Selon l'invention, on propose un dispositif de mesure de vitesse d'un objet par voie optique à partir de l'observation d'images d'une surface par rapport à laquelle l'objet se déplace, qui comporte des moyens d'éclairement de la surface, au moins un capteur optique apte à détecter le rayonnement renvoyé par la surface et à fournir des images de la surface, et des moyens de corrélation de ces images, **caractérisé en ce que** les moyens d'éclairement et le capteur optique ont un même axe optique oblique par rapport à la surface, avec une oblicité suffisante pour qu'un rayonnement issu de la source et réfléchi spéculairement sur la surface ne soit pas capté par le capteur.

Le capteur optique comprend un système optique permettant l'observation selon un angle d'ouverture étroit d'une zone de la surface éclairée par la tache lumineuse formée par les moyens d'éclairement. L'angle d'inclinaison par rapport à la normale est choisi suffisant pour qu'un rayonnement issu de la source et réfléchi spéculairement sur la surface ne soit pas capté par le capteur optique.

Le dispositif de mesure peut comprendre deux ensembles optiques comportant chacun une source de lumière fournissant un faisceau de lumière étroit dans un axe déterminé oblique par rapport à la surface observée et un capteur optique associé pour recueillir une lumière rétrodiffusée par la surface ; les sources ont des axes optiques parallèles et chaque capteur a un axe optique confondu avec celui de la source à laquelle il est associé ; les axes optiques des capteurs sont séparés par une distance D et des moyens de corrélation temporelle sont prévus pour déterminer le décalage temporel qui fournit un maximum de corrélation entre les signaux issus d'un capteur et les signaux décalés dans le temps de l'autre capteur.

Pour obtenir un faisceau de lumière d'axe colinéaire avec l'axe du capteur optique, on prévoit de préférence un petit miroir placé au centre d'une face d'une lentille d'entrée du capteur optique, ce miroir étant éclairé par un faisceau de lumière arrivant latéralement par rapport à l'axe, ce faisceau de lumière étant renvoyé dans l'axe du capteur par ce miroir.

La source de lumière peut être notamment une source laser ou une diode électroluminescente, éventuellement associée à une optique de conformation de faisceau pour donner à la tache lumineuse formée au sol une forme et des dimensions désirées.

Le capteur optique peut également être apte à fournir deux images prises à deux instants différents, et les moyens de corrélation peuvent être aptes à effectuer une corrélation spatiale entre les images pour déterminer le mouvement relatif du capteur entre ces deux instants par détermination du déplacement relatif d'images qui fournit la meilleure corrélation entre les images déplacées.

Le détecteur peut être matriciel et comporter nxm détecteurs élémentaires, n et m entiers dont l'un au moins est supérieur à 1, aussi bien pour une corrélation spatiale que pour une corrélation temporelle.

Avec un détecteur de nxm détecteurs élémentaires, nxm>1, on peut définir au moins un premier et un deuxième sous-ensembles de détecteurs élémentaires aptes à fournir une première et une deuxième images de la surface, la corrélation de ces images étant temporelle, c'est-à-dire que l'on recherche le décalage temporel entre les images qui maximise la corrélation.

D'autres caractéristiques et avantages de l'invention apparaîtront à la lecture de la description détaillée qui est faite en référence aux dessins annexés dans lesquels :
- la figure 1 représente le principe connu d'un capteur de vitesse de déplacement d'un objet par rapport à une surface plane ;
- la figure 2 représente l'influence d'une modification de distance entre le dispositif et la surface ;
- la figure 3 représente le principe de l'appareil de détection selon l'invention ;
- la figure 4 représente une variante de réalisation avec un prisme d'entrée sortie.

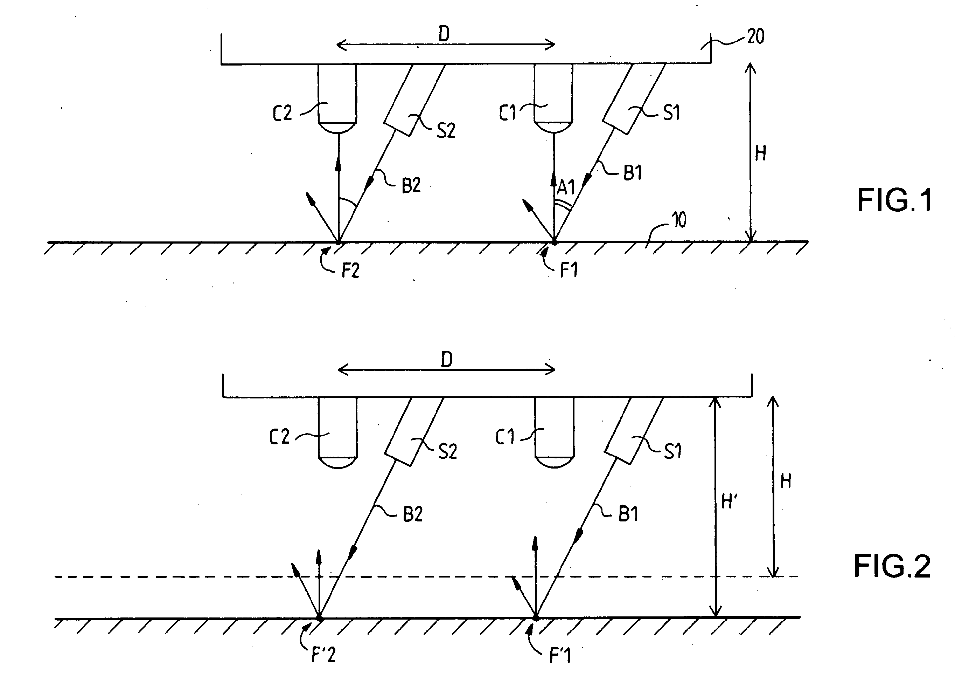

Sur la figure 1, on rappelle schématiquement le principe de mesure de vitesse par observation optique d'une surface 10 au-dessus de laquelle se déplace l'objet 20. L'objet 20 porte le dispositif de mesure qui fonctionne par observation optique du défilement de la surface 10. L'application principale envisagée est la mesure de vitesse d'un véhicule roulant sur le sol et par conséquent l'objet 10 représente alors le châssis du véhicule et la surface 10 représente la route, le dispositif de mesure étant fixé sous le châssis du véhicule et tourné vers le bas pour observer la route. Il faut comprendre que le principe est le même si l'objet 20 est fixe, la surface 10 étant mobile. Par exemple, la surface pourrait être une bande de tissu, une tôle métallique, etc., dont on cherche à mesurer la vitesse de défilement par rapport à un bâti fixe portant le dispositif de mesure de vitesse. Dans tout ce qui suit on parlera principalement de la surface du sol 10, l'objet 20 étant un véhicule roulant, mais on comprendra que l'invention ne se limite pas à cette application.

Le dispositif de mesure comporte deux ensembles optiques qui sont écartés l'un de l'autre d'une distance D. Le premier ensemble comprend une source de lumière S1 qui dirige un faisceau de lumière étroit B1 vers le sol pour produire une petite tache de lumière F1 sur le sol. La direction de l'axe du faisceau B1 n'est pas perpendiculaire à la surface 10. Elle est oblique et forme un angle d'incidence A1 avec la perpendiculaire au sol. Le premier ensemble optique comporte également un capteur optique placé juste au-dessus de la tache F1 et observant la tache dans une direction qui est perpendiculaire à la surface 10. Le capteur optique comprend un récepteur photoélectrique (par exemple une photodiode ou plusieurs photodiodes sous forme de barrette ou de matrice) et un système optique permettant de focaliser sur le récepteur une image de la tache F1. Le système optique, composé d'au moins une lentille de focalisation, a un axe optique qui est perpendiculaire à la surface 10, donc qui fait un angle A1 avec l'axe du faisceau B1 de la source de lumière. L'angle A1 est suffisamment grand pour que la lumière issue d'une réflexion spéculaire du faisceau B1 sur la surface 10, dans le cas où celle-ci est partiellement réfléchissante, n'atteigne pas le capteur optique et ne soit donc pas ou pratiquement pas projetée sur le récepteur photoélectrique. On comprendra que la valeur minimale de l'angle A1 dépend de l'ouverture du système optique du capteur, et également de la largeur du faisceau B1.

Par exemple, pour une lentille d'entrée de diamètre 25 mm, on choisira un angle A1 supérieur à au moins 2° (pour une distance capteur-surface de l'ordre de 200 mm). Cependant, si la surface n'est pas lisse, l'angle A1 devra être encore plus grand de façon à ce qu'aucun faisceau dû à la réflexion spéculaire (engendré dans un cône plus ouvert) n'atteigne le capteur. Dans l'exemple précédent et si la surface présente la rugosité d'un revêtement de route, l'angle sera choisi de l'ordre de 10°.

Dans un exemple simple, le deuxième ensemble optique peut être identique au premier et comporter une source S2 produisant un faisceau de lumière étroit B2 et une tache F2 sur le sol, et un capteur optique C2 d'axe perpendiculaire à la surface 10. L'angle d'incidence du faisceau étroit B2 a la même valeur A1 que l'angle d'incidence du faisceau B1.

Le premier capteur observe à un instant t une image de la texture du sol, et si l'objet se déplace dans la direction d'une ligne fictive qui sépare les centres optiques des deux capteurs, le deuxième capteur observe la même image à un instant t+dtm, où dtm est égal à D/V où V est la vitesse du véhicule et D la distance qui sépare les centres optiques des capteurs.

Le dispositif comporte des circuits de traitement de signal capables de faire des mesures de corrélation temporelle d'un échantillon temporel d'un des signaux avec un échantillon temporel de l'autre signal, de même durée mais décalé temporellement d'intervalles de temps dt0, dt1, dt2, etc. Les signaux sont échantillonnés en numérique pour faire ces mesures de corrélation.

Les mesures des différentes corrélations sont comparées et l'intervalle de temps pour lequel la corrélation maximale est observée représente une valeur approchée de la valeur dtm, à partir de laquelle la vitesse du véhicule est calculée : V = D/dtm

Les circuits de traitement de signal ne sont pas représentés sur la figure 1.

La figure 2 représente la difficulté engendrée lorsque la hauteur entre le châssis du véhicule et le sol n'a pas la valeur optimale pour laquelle l'axe optique des capteurs optiques est exactement à la verticale de la tache de lumière F1 ou F2. Si la hauteur devient H', la tache F1 se déplace en une tache F'1 et le capteur optique se met à observer dans l'axe vertical une zone non éclairée difficilement analysable.

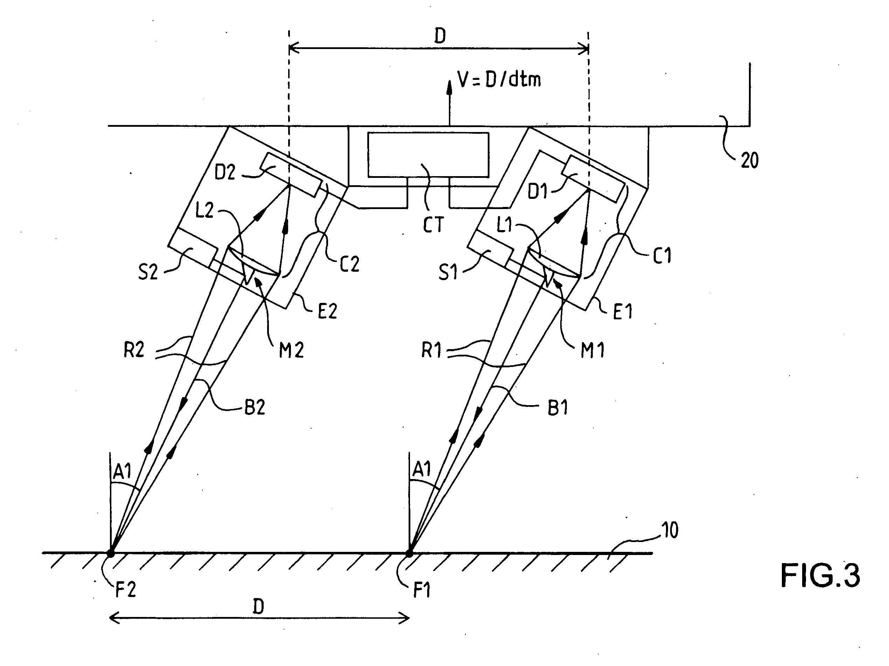

La figure 3 représente le principe du dispositif de mesure selon l'invention. Les mêmes références sont utilisées pour les mêmes éléments qu'à la figure 1.

Il y a encore deux ensembles optiques E1 et E2. La source de lumière S1 de l'ensemble E1 produit encore un faisceau étroit B1 sous une incidence oblique d'angle A1 par rapport à la normale au sol, et ce faisceau produit une tache lumineuse étroite sur le sol. Le capteur optique C1 de l'ensemble E1 a un axe optique qui est confondu avec celui du faisceau B1. La lumière rétrodiffusée par le sol vers le capteur optique C1 est collectée par ce dernier selon cet axe optique ; elle est représentée sur la figure 3 par un faisceau large R1.

Le capteur optique est représenté schématiquement ici par une lentille L1 et un détecteur photoélectrique D1. Le détecteur peut comporter un ou plusieurs détecteurs élémentaires (tels que des photodiodes) juxtaposés pour définir une barrette ou une matrice.

Pour permettre de transmettre un faisceau d'émission B1 dans le même axe que l'axe de réception du capteur optique C1, c'est-à-dire l'axe optique de la lentille L1, une solution est de disposer la source S1 latéralement par rapport au capteur optique, et de placer un petit miroir M1 de faible surface au centre de la lentille L1. Ce miroir doit réfléchir le maximum de lumière de la source pour en renvoyer l'essentiel vers le sol. En revanche, le miroir ne doit pas occulter une partie significative de la lentille et c'est pourquoi sa dimension doit être petite devant celle de la lentille, de façon à ce que le maximum de lumière rétrodiffusée arrive jusqu'au capteur. Ceci est possible notamment si la source S1 est une source laser. Une optique de conformation du faisceau de la source laser, non représentée, peut être prévue entre la source et le miroir, notamment une lentille divergente pour produire un léger élargissement du faisceau laser permettant d'ajuster à une dimension désirée la surface de la tache lumineuse F1 produite sur le sol. On peut aussi ajouter un diaphragme dans le plan focal de la lentille d'entrée L1 pour améliorer la précision sur la mesure de vitesse.

Sur la figure 3 on a représenté un deuxième ensemble optique E2 identique à l'ensemble E1, avec une source de lumière S2, un capteur C2 (lentille L2, détecteur D2), un miroir M2 pour renvoyer le faisceau B2 de la source vers le sol (tache F2) avec la même incidence que le faisceau B1.

Le principe de traitement électronique est le même qu'à la figure 1 : corrélations multiples des signaux avec des décalages temporels différents entre les signaux issus des deux détecteurs et recherche du décalage temporel dtm qui donne la meilleure corrélation, puis calcul de la vitesse horizontale par division de la distance horizontale D séparant les capteurs par le décalage temporel optimal dtm. Le traitement électronique est fait dans un circuit de traitement CT qui peut être localisé dans les ensembles E1 ou E2 ou à proximité de ceux-ci, ou encore qui peut faire partie d'un calculateur de bord du véhicule dédié également à d'autres fonctions.

Avec la disposition selon l'invention, non seulement on élimine la réflexion spéculaire lorsque la route est mouillée (il suffit de choisir un angle A1 suffisamment grand), mais encore on n'est plus gêné par les risques de variation de hauteur entre les ensembles optiques et le sol puisque le capteur optique regarde toujours dans la direction de la tache lumineuse quelle que soit la hauteur.

On peut choisir par exemple un angle d'inclinaison A1 compris entre 10° et 15°, mais cette valeur n'est pas critique pourvu qu'elle soit bien la même pour les deux ensembles optiques. Plus elle est élevée plus les réflexions spéculaires sont éliminées, mais une valeur trop élevée réduit les possibilités d'observation correcte du sol.

Dans ce qui précède, on a considéré que les ensembles optiques étaient identiques, que les taches F1 et F2 étaient ponctuelles, et que le détecteur associé à chaque ensemble optique ne comprenait qu'un seul élément de détection. Dans ce cas, on comprend qu'on ne peut mesurer une vitesse que dans la direction qui sépare la première tache ponctuelle F1 de la deuxième tache ponctuelle F2. Par conséquent, si une composante de vitesse existe perpendiculairement à cette direction, la deuxième tache F2 risque de ne pas éclairer une portion de route préalablement éclairée par la première tache et l'obtention d'un pic de corrélation sera impossible. Il est donc préférable que l'une des taches lumineuses, par exemple la tache F2, ne soit pas ponctuelle mais s'étende sur le sol linéairement perpendiculairement à la direction principale de déplacement du véhicule. Le détecteur D2 comporte alors une barrette de détection comportant de multiples pixels alignés dans la direction perpendiculaire, par exemple une centaine de pixels répartis sur une trentaine de millimètres. Chaque pixel est traité indépendamment et corrélé avec le signal du détecteur D1. On recherche la meilleure corrélation parmi toutes les corrélations effectuées (avec les différents pixels de D2 et, pour chaque pixel de D2 avec des décalages temporels différents comme expliqué précédemment). On détermine alors le pixel de D2 et le décalage temporel qui donnent la meilleure corrélation, ce qui permet de déterminer non seulement la valeur de la vitesse mais aussi la direction de cette vitesse, tenant compte ainsi non seulement de variations volontaires de direction du véhicule mais aussi de glissements dus à un dérapage.

On peut noter par ailleurs que pour affiner la détermination de deux composantes de vitesse du véhicule, on peut prévoir que l'un des capteurs comporte une barrette de multiples pixels alignés dans la direction principale de déplacement du véhicule (et la source fournit un faisceau plat étroit dans cette direction), et l'autre capteur comporte une barrette de multiples pixels alignés dans la direction perpendiculaire (et la source correspondante fournit un faisceau plat étroit dans cette direction perpendiculaire).

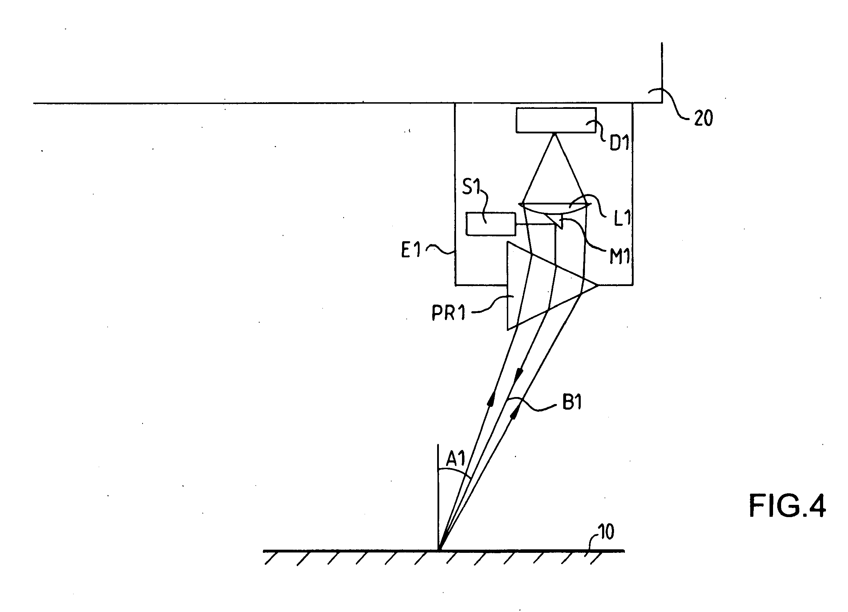

Sur la figure 3, on a considéré que les ensembles optiques étaient montés sur le châssis avec une mécanique de fixation définissant un angle A1 par rapport au châssis de manière que les axes optiques des capteurs aient bien l'incidence voulue par rapport au sol. Sur la figure 4 on a indiqué une possibilité légèrement différente : les axes optiques des capteurs proprement dit sont verticaux et un prisme PR1 (pour l'ensemble E1) réalise la déviation de faisceau d'angle A1. Il s'agit là d'une commodité de montage pour un véhicule, permettant de monter les ensembles verticalement. Dans tous les cas, l'axe optique d'émission et réception entre le véhicule et le sol a une incidence oblique A1. Le prisme peut être remplacé par d'autres éléments optiques (optique diffractive par exemple) accomplissant la même fonction.

Dans un souci de miniaturisation ou de compacité, il peut être avantageux de n'utiliser qu'une seule source (par exemple S2) et de supprimer l'autre (S1). Dans ce cas, il faut utiliser des optiques supplémentaires et spécifiques afin que le faisceau issu de S2 puisse traverser partiellement le miroir ou prisme M2 puis, par divers renvois, se propager jusqu'au miroir ou prisme M1 d'où il est renvoyé sur la tache F1, réalisant l'équivalent d'une source S1.

Une autre façon de miniaturiser l'ensemble est d'utiliser un détecteur matriciel dans lequel deux sous-ensembles de détecteurs élémentaires sont définis pour jouer le rôle des détecteurs D1 et D2. Dans ce cas, il est très intéressant de n'utiliser qu'une seule source de lumière.

Enfin, il peut être avantageux d'appliquer l'invention à un système à corrélation spatiale comme on en a proposé dans l'art antérieur cité précédemment (relatif à la détection du mouvement d'une souris optique d'ordinateur). Dans un tel système, on observe des images successives prises par le capteur à deux instants différents, et on effectue un calcul de corrélation entre l'une des images et l'autre image décalée spatialement dans différentes directions et avec différentes amplitudes pour déterminer quel est le déplacement d'image qui donne la meilleure corrélation entre les images. De ce déplacement on déduit la vitesse.

## Revendications

1. Dispositif de mesure de vitesse d'un objet par voie optique à partir de l'observation d'images d'une surface (10) par rapport à laquelle l'objet (20) se déplace, qui comporte des moyens d'éclairement (S1) de la surface, au moins un capteur optique (C1) apte à détecter le rayonnement renvoyé par la surface, et des moyens de corrélation de ces images, **caractérisé en ce que** les moyens d'éclairement et le capteur optique ont un même axe optique oblique (A1) par rapport à la surface, avec une oblicité suffisante pour qu'un rayonnement issu de la source et réfléchi spéculairement sur la surface ne soit pas capté par le capteur.

2. Dispositif de mesure selon la revendication 1, **caractérisé en ce que** le capteur optique est apte à fournir deux images prises à deux instants différents, et les moyens de corrélation sont aptes à effectuer une corrélation spatiale entre les images pour déterminer le mouvement relatif du capteur entre ces deux instants par détermination du déplacement relatif d'images qui fournit la meilleure corrélation entre les images déplacées.

3. Dispositif de mesure selon la revendication 2, **caractérisé en ce que** le détecteur est matriciel et comporte nxm détecteurs élémentaires, n et m entiers dont l'un au moins est supérieur à 1.

4. Dispositif selon la revendication 1, **caractérisé en ce que** le détecteur comporte nxm détecteurs élémentaires, n et m entiers dont l'un au moins est supérieur à 1, le détecteur étant divisé en au moins un premier et un deuxième sous-ensembles de détecteurs élémentaires aptes à fournir une première et une deuxième images de la surface, et **en ce que** les moyens de corrélation sont aptes à établir une corrélation temporelle entre ces images.

5. Dispositif selon la revendication 1, **caractérisé en ce que** les moyens d'éclairement comprennent deux sources distinctes, que le capteur optique comprend deux détecteurs distincts, que chaque source est associée à un détecteur respectif, et que la corrélation des images fournies par les détecteurs est temporelle.

6. Dispositif selon la revendication 5, **caractérisé en ce que** les sources ont des actes optiques parallèles.

7. Dispositif selon l'une des revendications précédentes, **caractérisé en ce que** le capteur optique comporte une lentille d'entrée et un petit miroir collé au centre de la lentille pour renvoyer dans l'axe du capteur un faisceau arrivant latéralement par rapport à cet axe.

8. Dispositif selon la revendication 7, **caractérisé en ce que** la lentille d'entrée comporte un diaphragme dans son plan focal.

9. Dispositif selon l'une des revendications précédentes, **caractérisé en ce que** la source de lumière est une source laser ou une diode électroluminescente.

10. Dispositif selon la revendication 9, **caractérisé en ce que** la source de lumière est associée à une optique de conformation de faisceau pour donner à la tache lumineuse formée au sol une forme et des dimensions désirées.

11. Dispositif selon l'une des revendications précédentes, appliqué à la détection de vitesse d'un véhicule se déplaçant sur le sol.

## Claims

1. A device for measuring the speed of an object by optical means on the basis of the observation of images on a surface (10) in relation to which the object (20) moves, which includes means for illuminating (S1) the surface, at least one optical sensor (C1) capable of detecting the radiation returned by the surface, and means for correlating these images, **characterised in that** the illuminating means and the optical sensor have the same oblique optical axis (A1) relative to the surface, the obliquity of which is such that the radiation which originates from the source and is specularly reflected on the surface is not captured by the sensor.

2. The device for measuring according to claim 1, **characterised in that** the optical sensor is capable of providing two images taken at two different times, and the means for correlating are capable of performing a spatial correlation between the images to determine the relative movement of the sensor between these two instants by determining the relative displacement of images, which provides the best correlation between the displaced images.

3. The device for measuring according to claim 2, **characterised in that** the detector is a matricial detector and includes nxm elementary detectors, where n and m are integers, at least one of which is higher than 1.

4. The device according to claim 1, **characterised in that** the detector includes nxm elementary detectors, where n and m are integers, at least one of which is higher than 1, the detector being divided in to at least one first and one second sub-assembly of elementary detectors capable of providing a first and a second image of the surface, and **in that** the means for correlating are capable of establishing a time correlation between these images.

5. The device according to claim 1, **characterised in that** the illuminating means include two distinct sources, **in that** the optical sensor includes two distinct detectors, **in that** each source is associated with a respective detector, and **in that** the correlation of the images provided by the detectors is temporal.

6. The device according to claim 5, **characterised in that** the sources have parallel optical effects.

7. The device according to one of the previous claims, **characterised in that** the optical sensor includes an input lens and a small mirror bonded to the centre of the lens in order to return a beam to the axis of the sensor which arrives laterally relative to this axis.

8. The device according to claim 7, **characterised in that** the input lens includes a diaphragm in its focal plane.

9. The device according to one of the previous claims, **characterised in that** the light source is a laser source or an electroluminescent diode.

10. The device according to claim 9, **characterised in that** the light source is associated with a beam shaping optic to provide the light spot formed on the ground with the desired shape and dimensions.

11. The device according to one of the previous claims, applied to speed detection in a vehicle moving over the ground.

## Patentansprüche

1. Vorrichtung zum Messen der Geschwindigkeit eines Objekts auf optischem Weg anhand der Beobachtung von Bildern einer Oberfläche (10), in Bezug auf die sich das Objekt (20) bewegt, die Mittel zum Beleuchten (S1) der Oberfläche, wenigstens einen optischen Sensor (C1), der von der Oberfläche zurückgeworfene Strahlung erfassen kann, und Mittel zum Korrelieren dieser Bilder umfasst, **dadurch gekennzeichnet, dass** die Mittel zum Beleuchten und der optische Sensor dieselbe schräge optische Achse (A1) relativ zu der Oberfläche haben, wobei die Schräge derart ist, dass die Strahlung, die von der Quelle kommt und spiegelartig auf der Oberfläche reflektiert wird, von dem Sensor nicht erfasst wird.

2. Vorrichtung zum Messen nach Anspruch 1, **dadurch gekennzeichnet, dass** der optische Sensor zwei zu unterschiedlichen Zeiten aufgenommene Bilder liefern kann und die Korreliermittel eine räumliche Korrelation zwischen den Bildern ausführen können, um die relative Bewegung des Sensors zwischen diesen beiden Zeitpunkten durch Ermitteln der relativen Verschiebung von Bildern zu ermitteln, die die beste Korrelation zwischen den verschobenen Bildern ergibt.

3. Vorrichtung zum Messen nach Anspruch 2, **dadurch gekennzeichnet, dass** der Detektor ein matrizieller Detektor ist und nxm Elementardetektoren beinhaltet, wobei n und m ganze Zahlen sind, von denen wenigstens eine größer als 1 ist.

4. Vorrichtung nach Anspruch 1, **dadurch gekennzeichnet, dass** der Detektor nxm Elementardetektoren beinhaltet, wobei n und m ganze Zahlen sind, von denen wenigstens eine größer als 1 ist, wobei der Detektor in wenigstens eine erste und eine zweite Unterbaugruppe von Elementardetektoren unterteilt ist, die ein erstes und ein zweites Bild der Oberfläche liefern können, und **dadurch, dass** die Korreliermittel eine zeitliche Korrelation zwischen diesen Bildern herstellen können.

5. Vorrichtung nach Anspruch 1, **dadurch gekennzeichnet, dass** die Beleuchtungsmittel zwei separate Quellen beinhalten, dass der optische Sensor zwei separate Detektoren beinhaltet, dass jede Quelle mit einem jeweiligen Detektor assoziiert ist und dass die Korrelation der von den Detektoren gelieferten Bilder zeitlich ist.

6. Vorrichtung nach Anspruch 5, **dadurch gekennzeichnet, dass** die Quellen parallel optische Wirkungen haben.

7. Vorrichtung nach einem der vorherigen Ansprüche, **dadurch gekennzeichnet, dass** der optische Sensor eine Eingangslinse und einen kleinen Spiegel beinhaltet, der auf die Mitte der Linse geklebt ist, um einen Strahl zur Achse des Sensors zurückzuwerfen, der lateral relativ zu dieser Achse ankommt.

8. Vorrichtung nach Anspruch 7, **dadurch gekennzeichnet, dass** die Eingangslinse eine Membran in ihrer Fokalebene aufweist.

9. Vorrichtung nach einem der vorherigen Ansprüche, **dadurch gekennzeichnet, dass** die Lichtquelle eine Laserquelle oder eine Elektrolumineszenzdiode ist.

10. Vorrichtung nach Anspruch 9, **dadurch gekennzeichnet, dass** die Lichtquelle mit einer Strahlformungsoptik assoziiert ist, um den auf dem Boden gebildeten Lichtfleck mit der gewünschten Form und den gewünschten Abmessungen zu erzielen.

11. Vorrichtung nach einem der vorherigen Ansprüche, angewendet auf die Erfassung der Geschwindigkeit eines über den Boden fahrenden Fahrzeugs.
